# EUROPÄISCHE PATENTSCHRIFT

(11) **EP 1 966 486 B1**
(45) Veröffentlichungstag und Bekanntmachung des Hinweises auf die Patenterteilung: **09.06.2010**
(21) Anmeldenummer: 06829894.2
(22) Anmeldetag: 28.12.2006
(51) Int. Cl.: F03B 17/06, F03D 3/00

(54) **VORRICHTUNG UND ANLAGE ZUR ERZEUGUNG VON REGENERATIVER UND ERNEUERBARER ENERGIE AUS WIND**
DEVICE AND SYSTEM FOR PRODUCING REGENERATIVE AND RENEWABLE ENERGY FROM WIND
DISPOSITIF ET SYSTEME DE PRODUCTION D'ENERGIE EOLIENNE REGENERATIVE ET RENOUVELABLE

(30) Priorität: 29.12.2005 DE 102005062908
(43) Veröffentlichungstag der Anmeldung: 10.09.2008
(73) Patentinhaber: Hamann, Georg, 83259 Schleching (DE)
(72) Erfinder: Hamann, Georg, 83259 Schleching (DE)
(74) Vertreter: Reinhardt, Markus
(86) Internationale Anmeldenummer: PCT/EP2006/012585
(87) Internationale Veröffentlichungsnummer: WO 2007/079974

(56) Entgegenhaltungen:
- WO-A-02/33253
- GB-A- 2 264 754
- JP-A- 60 090 992
- US-A- 4 355 958
- US-A- 5 195 871

## Beschreibung

Die vorliegende Erfindung betrifft eine Vorrichtung zur Erzeugung von regenerativer und erneuerbarer Energie aus Wind, nach dem Oberbegriff des Anspruchs 1.

Weiterhin betrifft die vorliegende Erfindung eine Anlage zur Erzeugung von regenerativer und erneuerbarer Energie aus Wind, die eine Mehrzahl von derartigen Vorrichtungen aufweist.

In den letzten Jahren ist eine Vielzahl von Energieerzeugungsvorrichtungen und - anlagen bekannt geworden, die auf der Nutzung der Windenergie basieren. Sowohl auf dem Land als auch in sog. Off-Shore-Anlagen im Meer werden einzelne Windräder oder komplette Windparks erstellt, die eine Vielzahl von Windrädern aufweisen, die durch vorbeiströmende Luft in Drehung versetzt werden und dadurch Generatoren antreiben, die Strom erzeugen.

Die als einzelne Windräder oder als Windparks aufgestellten Windkraftanlagen haben jedoch eine Reihe von Nachteilen. Die Windräder müssen am Boden starr verankert werden und benötigen hierzu eine entsprechende Konstruktion, die extrem teuer ist, und die Kosten/Nutzen-Bilanz erheblich beeinträchtigt, wenn nicht gar zunichte bzw. negativ macht.

Zudem bringen einzelne Windkrafträder oder ganze Windparkanlagen erhebliche Umweltprobleme mit sich, da sie, insbesondere auf dem Festland, aber auch im Meer nicht zur Landschaft passen und diese extrem verunstalten.

Aus der GB 2 264 754, die als nächstliegender Stand der Technik angesehen wird, ist eine Windturbine bekannt, die entlang einer Antriebswelle angeordnete und versetzt zueinander angeordnete Blätter aufweist, die infolge des vorbei strömenden Windes in Drehung um die Antriebswelle versetzt werden. Die Blätter nach der GB 2 264 754 sind flach ausgebildet und werden senkrecht zur Ebene der Blätter vom Wind angeströmt.

Aus der US 4,355,958 ist eine Anlage zur Erzeugung von Energie aus Wind bekannt, die entlang einer Antriebswelle angeordnete zylindrische Schaufeln aufweist, die im Querschnitt halbkreisförmig aufgeschnitten sind. In den halbkreisförmig offenliegenden Abschnitten der Zylinder der Schaufeln soll sich der Wind fangen und so zum Antrieb der Antriebswelle ausgenutzt werden.

In der WO 02/33253 A2 ist eine Windturbine offenbart, die mehrere Blätter aufweist, die entlang einer Antriebswelle und versetzt zueinander angeordnet sind. Die Blätter werden durch einen aufwändigen Mechanismus bei jeder Umdrehung um die Antriebswelle derart betätigt, dass jedes Blatt, wenn es im Wind steht, zwei seitliche Elemente ausklappt, um dem Wind eine größere Angriffsfläche zu bieten, während diese beiden seitlichen Elemente eingeklappt werden, wenn das Blatt gegen den Wind bewegt wird, um den Widerstand des Blattes zu verringern.

Der vorliegenden Erfindung liegt deshalb die Aufgabe zugrunde, eine besonders umweltverträgliche, einfach aufgebaute und einfach einzusetzende Vorrichtung zur Erzeugung von regenerativer und erneuerbarer Energie aus Wind zu schaffen, die zudem einen besonders hohen Wirkungsgrad auch bei unterschiedlicher Windverfügbarkeit aufweist.

Weiterhin soll auch eine entsprechend modulartig aufbaubare Anlage aus derartigen Vorrichtungen geschaffen werden.

Die erfindungsgemäße Vorrichtung zur Erzeugung von regenerativer und erneuerbarer Energie aus Wind umfasst wenigstens einen Generator zur Erzeugung elektrischer Energie und eine mit dem Generator verbundene Antriebswelle, die eine Mehrzahl von Schaufeln aufweist, welche durch vorbeiströmende Luft in Drehung versetzbar sind. Dadurch, dass die Schaufeln entlang der Antriebswelle und zueinander versetzt angeordnet sind, wird eine optimale Ausnutzung des durch die vorbeiströmende Luft vorhandenen Druckes ausgenutzt und ergibt sich eine überraschend hohe Drehzahl der Antriebswelle sowie ein hohes Drehmoment.

Mit der erfindungsgemäßen Vorrichtung zur Erzeugung von regenerative und erneuerbarer Energie aus Wind wird eine Vielzahl von Vorteilen erreicht, die unter anderem sind:
- einfache und leichte Einsetzbarkeit ohne anfallenden Baumaßnahmen;
- Ermöglichen einer regionalen Grundversorgung durch entsprechenden ortsnahen Einsatz beim Stromverbraucher;
- universelle Anpassung der Vorrichtung an die vorhandenen Strömungsbedingungen und damit Sicherstellung eines optimalen Wirkungsgrades der erfindungsgemäßen Vorrichtung;
- umweltfreundliche Energieerzeugung;
- optimale Größenanpassung der Vorrichtung an die entsprechende zu erzeugende Energiemenge, beispielsweise Montagesatz in Koffergröße für den Einsatz auf entlegenen Besiedelungen und dergleichen;
- absolut emissionsfreie Energieerzeugung.

Vorteilhafterweise sind erfindungsgemäß die Schaufeln repellerartig ausgebildet. Repeller sind gleich aufgebaut wie Propeller, gemäß Definition dienen jedoch Propeller zum Antrieb (beispielsweise Flugzeug oder Schiff), wohingegen Repeller vom umströmenden Medium angetrieben werden. Unter dem Begriff repellerartig sind Repeller zu verstehen die eine, zwei oder auch mehrere Schaufeln aufweisen können.

Vorteilhafterweise ist erfindungsgemäß die Winkelstellung der Schaufeln untereinander einstellbar. Dies führt zu einer Optimierung der Ausnutzung der vorbeiströmenden Luftmenge, wobei die Winkelstellung der Schaufeln untereinander entlang der Antriebswelle unterschiedlich sein kann.

Weiterhin ist vorteilhaft, dass der Abstand der Schaufeln in Längsrichtung der Antriebswelle einstellbar ist und gegebenenfalls unterschiedlich bzw. nicht konstant ist.

Weiterhin ist vorteilhaft, dass die Winkelstellung der Schaufelfläche bezüglich der Antriebswelle einstellbar ist. Damit ist die Stellung der Schaufelfläche an den, an ihr angreifenden Strömungsdruck einstellbar und kann über die Länge der Antriebswelle unterschiedlich sein. Dabei kann die Einstellung mittels Computersteuerung und/oder mechanisch, elektromotorisch, pneumatisch oder hydraulisch erfolgen.

Dadurch, dass die Schaufeln auf der Antriebswelle lösbar montiert sind, wird ein schnelles Auswechseln einzelner Schaufeln möglich, dessen Grund beispielsweise Abnutzung oder Beschädigung sein kann.

In einer ersten bevorzugten Ausführungsform ist die Antriebswelle unmittelbar mit dem Generator verbunden und treibt diesen direkt an. Alternativ kann die Antriebswelle mit dem Generator auch über ein entsprechendes Getriebe verbunden sein.

Dadurch, dass die Antriebswelle in einem Rahmen gelagert ist, beispielsweise in Rechteckform, wird der Vorteil eines einfachen, kompakten, leicht transportfähigen und leicht anbringbaren Aufbaus erreicht. An dem Rahmen kann vorteilhafterweise auch der Generator angebracht sein.

Weiterhin ist vorteilhaft, dass der Rahmen im Wesentlichen waagrecht und um eine vertikale Achse drehbar angeordnet ist. So kann sich die Vorrichtung stets optimal der sich verändernden Windrichtung anpassen.

Weist die Vorrichtung ein die Antriebswelle und die Schaufeln umgebendes Rohr auf, so ergibt sich der Vorteil einer gezielten und gegebenenfalls einstellbare Durchleitung der Luft. Das Rohr kann sich entlang der Antriebswelle mit einem konstanten Durchmesser oder einem sich von der Lufteinlaßseite zur Luftauslaßseite verjüngenden Durchmesser erstrecken.

Mit Vorteil kann die erfindungsgemäße Vorrichtung, vorzugsweise oberhalb eines Schiffskörpers angeordnet sein, der einen oder mehrere Auftriebs- oder Schwimmkörper aufweist und vorzugsweise eine Verankerung aufweist. Damit wird der große Vorteil erreicht, dass die Vorrichtung auf dem Wasser schwimmt, was ermöglicht, die erfindungsgemäße Vorrichtung einfach und ohne weitere Baumaßnahme auf Wasser (off-shore) zu setzen. Durch eine geeignete Verankerung wird auch eine einfach Lagesicherung möglich so dass die Vorrichtung ohne weitere kostspielige Baumaßnahmen zur Stromerzeugung eingesetzt werden kann.

Unterstützt wird dies noch dadurch, dass die Vorrichtung vorteilhafterweise ein selbstausrichtendes Ruderwerk aufweist.

Wie oben ausgeführt, ergeben sich bei der erfindungsgemäßen Energieerzeugungsvorrichtung erhebliche Drehgeschwindigkeiten, die zu Vibrationen führen können. Vorteilhafterweise ist die Antriebswelle nicht nur an ihren beiden Enden sondern auch an wenigstens einer weiteren Stelle, beispielsweise an zwei bis fünf Stellen zwischen den Enden gelagert, was einerseits zu einer größeren Steifigkeit der gesamten Vorrichtung und andererseits zu einem im Wesentlichen vibrationsarmen oder vibrationsfreien Drehen der Antriebswelle führt.

Vorteilhafterweise sind zur Lagerung der Antriebswelle wartungsfreie, ölfreie Gleit- oder Kugellager auch aus Kunststoff oder Keramik vorgesehen, die einerseits eine lange Lebensdauer aufweisen und andererseits keine Instandhaltung benötigen.

Weiterhin ist vorteilhaft, dass die Antriebswelle als eine Vielzahnwelle und die Halterung der jeweiligen Schaufeln als Vielzahnhalterung ausgebildet ist, wodurch ein einfaches, wirksames und leicht einstellbares Montagesystem der Schaufeln an der Antriebswelle erreicht wird bei gleichzeitig stabiler Lagerung der Schaufeln an der Antriebswelle zur störungsfreien Kraftübertragung auf die Antriebswelle.

Durch einen Gitterkäfig wird die Vorrichtung vor herumfliegenden Gegenständen, wie beispielsweise Herbstlaub oder auch Vögeln geschützt.

Eine besonders vorteilhafte Ausgestaltung der Schaufeln ergibt sich dadurch, dass jeweils zwei um 180° versetzte Schaufeln ein gemeinsames Hohlprofil bzw. eine gemeinsame Schaufel bilden, das bzw. die einen Hohlraum aufweist, in dem eine Flüssigkeit vorhanden ist. Die Flüssigkeit füllt dabei den Hohlraum nicht vollständig, vorzugsweise im Wesentlichen zur Hälfte aus. Der Hohlraum ist in den beiden Schaufelhälften symmetrisch ausgebildet. Wenn sich der Hohlraum in der Waagrechten befindet, ist in beiden Hohlraumhälften im Wesentlichen die gleiche Menge Flüssigkeit. Drehen sich nun die Schaufeln weiter, so beschleunigt die Flüssigkeit durch die Schwerkraft schlagartig und versetzt die Schaufeln in weitere Drehung. Bei einer Vielzahl von Hohlprofilschaufeln ergibt sich sodann eine konstante Drehzahl und ein im Wesentlichen konstantes Drehmoment. Vorteilhafterweise ist die Flüssigkeit Wasser, es kann jedoch auch jegliche geeignete Flüssigkeit verwendet werden.

Diese Ausgestaltung eignet sich insbesondere bei nur wenig Luftsttrömung, weil nur eine geringe Antriebsenergie von außen notwendig ist, die Schaufeln in Drehung zu versetzen.

Die vorliegende Erfindung hat auch eine Anlage zur Erzeugung von regenerativer und erneuerbarer Energie aus Wind zum Gegenstand, wobei sie sich dadurch auszeichnet, dass sie eine Mehrzahl von hintereinander und/oder nebeneinander und/oder übereinander angeordneter Vorrichtungen nach einem der Ansprüche 1 bis 20 aufweist.

Eine derartige Anlage kann somit modulmäßig aufgebaut werden und ist universell an die Einsatzbedingungen anpassbar.

In einer speziellen Ausführungsform können die Antriebswellen der Vorrichtungen auch kardanisch miteinander verbunden sein, und damit gemeinsam einen Generator antreiben.

Weiterhin umfasst die vorliegende Erfindung auch die Verwendung einer oder mehrerer erfindungsgemäßer Vorrichtungen sowie die Verwendung einer erfindungsgemäße Anlage zum Antrieb eines Schiffes. Die durch die erfindungsgemäße Vorrichtung bzw. Anlage erzeugte Energie kann zum Antrieb von Elektromotoren dienen, die ihrerseits entsprechende Schiffspropeller antreiben. Dies kann direkt oder über Akkumulatoren erfolgen, die durch die erfindungsgemäße Vorrichtung bzw. Anlage aufgeladen werden.

Weiterhin kann die erfindungsgemäße Vorrichtung bzw. Anlage anstelle oder auch dazu dienen, den auf einem Passagierschiff und/oder Frachtschiff anfallenden elektrischen Energieverbrauch zu befriedigen.

Insgesamt ist die erfindungsgemäße Vorrichtung bzw. Anlage universell sowohl immobil als auch bei mobilen Fahrzeugen zu Land, zu Wasser und in der Luft einsetzbar.

Weitere Einzelheiten, Merkmale und Vorteile ergeben sich aus der nachfolgenden Beschreibung unter Bezugnahme auf die beigefügten Zeichnungen. Darin zeigt:
- Figur 1: eine erste Ausführungsform der erfindungsgemäßen Vorrichtung zur Erzeugung von regenerativer und erneuerbarer Energie in Seitenan- sicht;
- Figur 2: eine schematische Schnittansicht entlang der Linie II-II von Fig. 1;
- Figur 3: eine schematische Teilansicht der Antriebswelle mit Schaufeln der erfindungsgemäßen Vorrichtung;
- Figur 4: in perspektivischer Teilansicht eine konstruktive Ausgestaltung der Antriebswelle mit Schaufeln und deren Lagerung;
- Figur 5: in Explosionsdarstellung einen Lagerabschnitt von zwei Schaufeln auf der Antriebswelle;
- Figur 6: eine schematische Frontansicht einer weiteren Ausführungsform der erfindungsgemäßen Vorrichtung;
- Figur 7: eine schematische Draufsicht auf einen drehbaren Rahmen der erfin- dungsgemäßen Vorrichtung;
- Figur 8: in perspektivischer Ansicht eine weitere Ausführungsform der An- triebswelle der erfindungsgemäßen Vorrichtung mit Schaufeln mit Hohlprofilen;
- Figur 9: die Frontansicht der Ausführungsform gemäß Fig. 8;
- Figur 10: die Seitenansicht der Ausführungsform von Fig. 8;
- Figur 11a bis 11c: eine vergrößerte schematische Ansicht der Ausführungsform der Schaufeln mit Hohlprofil;
- Figur 12a bis 12c: eine Ausführungsvariante der Schaufeln von Figuren 11a bis 11c;
- Figur 13: eine schematische Draufsicht auf eine erste Ausführungsform der er- findungsgemäßen Anlage mit einem Schiffskörper mit einem Schwimmkörper;
- Figur 14: eine schematische Draufsicht auf eine zweite Ausführungsform der erfindungsgemäßen Anlage mit einem Schiffskörper mit zwei Schwimmkörpern;
- Figur 15: eine schematische Draufsicht auf eine dritte Ausführungsform der er- findungsgemäßen Anlage mit einem Schiffskörper mit drei Schwimm- körpern;
- Figur 16: eine schematische Front/Teilschnittansicht der Verwendung einer er- findungsgemäßen Vorrichtung bei einem Schiff mit mehreren Schwimmkörpern; und
- Figur 17: eine schematische Seitenansicht der Verwendung mehrerer erfin- dungsgemäßer Vorrichtungen bzw. einen aus ihnen gebildeter Anlage bei einem größeren Schiff mit einem Schwimmkörper.

Bei der nachfolgenden Beschreibung sind in den Figuren dargestellte gleiche Elemente mit den gleichen Bezugsziffern bezeichnet.

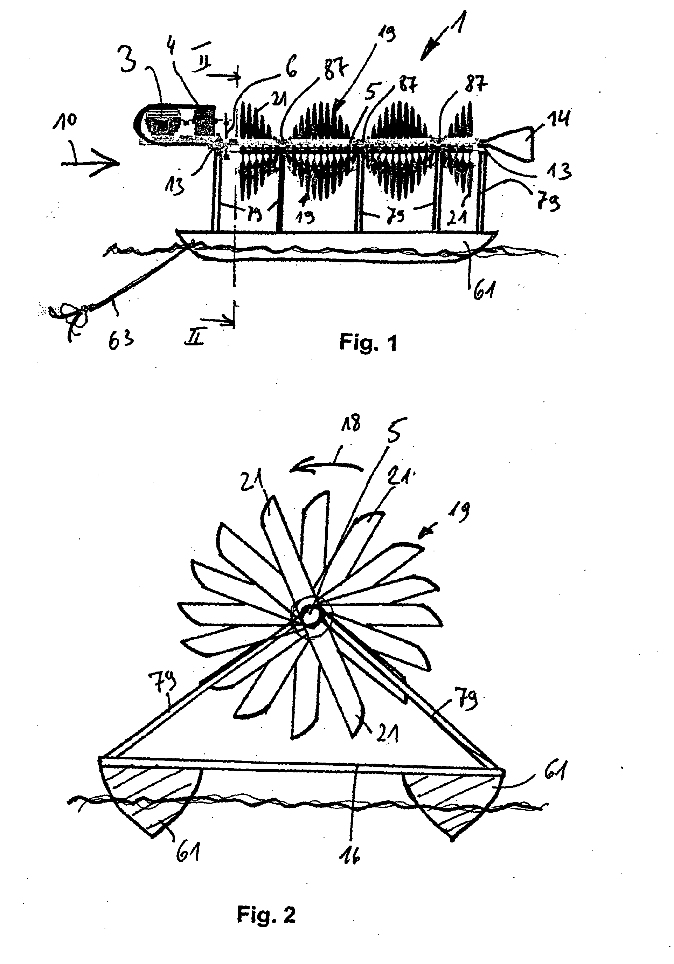

In Figur 1 ist eine erste Ausführungsform einer erfindungsgemäßen Vorrichtung 1 zur Erzeugung von regenerativer und erneuerbarer Energie aus Wind in einer Seitenansicht dargestellt. Gemäß Figur 1 weist die erfindungsgemäße Vorrichtung 1 einen Generator 3 auf, der im Ausführungsbeispiel über ein Getriebe 4 und einen Riemen 6 mit einer Antriebswelle 5 verbunden ist. Als Riemen können Flachriemen, Keilriemen oder auch Zahnriemen Verwendung finden.

Die Antriebswelle 5 ist an ihren Endabschnitten in Lagern 13 gelagert und ist weiterhin an Lagern 87 gelagert, wobei alle Lager mittels Stützen 79 abgestützt sind.

Wie aus Figur 1 weiterhin ersichtlich, umfasst die erfindungsgemäße Vorrichtung in dieser Ausführungsform Auftriebs- oder Schwimmkörper 61, wie sie besser aus Figur 2 ersichtlich sind, die eine Schnittansicht entlang der Linie II - II von Figur 1 ist.

Wie aus Figur 1 weiterhin ersichtlich, sind entlang der Antriebswelle 5 eine Vielzahl von Repellern 19 in gleicher Form wie Propeller angeordnet. Die Repeller 19 weisen jeweils zwei um 180° versetzt angeordnete Schaufeln 21 auf, die von der vorbeiströmenden Luft in Drehung versetzt werden. Wie bereits erwähnt, können die Repeller 19 auch nur eine Schaufel oder mehr als zwei Schaufeln 21 aufweisen.

Die Schaufeln 21 bzw. die Repeller 19 sind entlang der Antriebswelle 5 und zueinander versetzt angeordnet, was weiter unten noch näher beschrieben werden wird.

Vorzugsweise sind die Schwimmkörper 61 mit einer Verankerung 63 versehen, die ermöglicht, dass die erfindungsgemäße Vorrichtung sich dem gemäß Pfeil 10 anströmenden Wind ausrichtet. Zur Unterstützung dieser Ausrichtung weist die erfindungsgemäße Vorrichtung 1 ein Ruderwerk 14 auf, mit Hilfe dessen, die erfindungsgemäße Vorrichtung in die anströmende Luftströmung ausgerichtet wird.

Figur 2 verdeutlicht weiterhin die einfache Ausgestaltung der erfindungsgemäßen Vorrichtung. Die beiden Schwimmkörper 61 sind mittels, wenigsten einer Verbindungseinrichtung 16, beispielsweise in Form einer Querstrebe, verbunden und die Stützen 79 stützen sich entsprechend auf den Schwimmkörpern 61 ab.

Die Schaufeln 21 der erfindungsgemäßen Vorrichtung drehen sich gemäß Pfeil 18 gegen den Uhrzeigersinn, wobei die Schaufeln, wie aus Figur 2 ersichtlich, zueinander versetzt angeordnet sind. Die Versetzung findet, wie in Figur 1 dargestellt, entlang der Antriebsachse 5 statt, wodurch sich die dort dargestellte Kontur ergibt.

Selbstverständlich sind andere Anordnungen der Schaufeln 21 möglich, was sowohl deren Abstand entlang der Antriebsachse 5 als auch deren Winkelversetzung zueinander betrifft. Mit anderen Worten, die Schaufeln 21 eines Repellers 19 sind zu den Schaufeln 21 des benachbarten Repellers 19 um einen einstellbaren Winkel versetzt, um eine optimale Kraftübertragung des vorbeiströmenden Mediums zu erreichen.

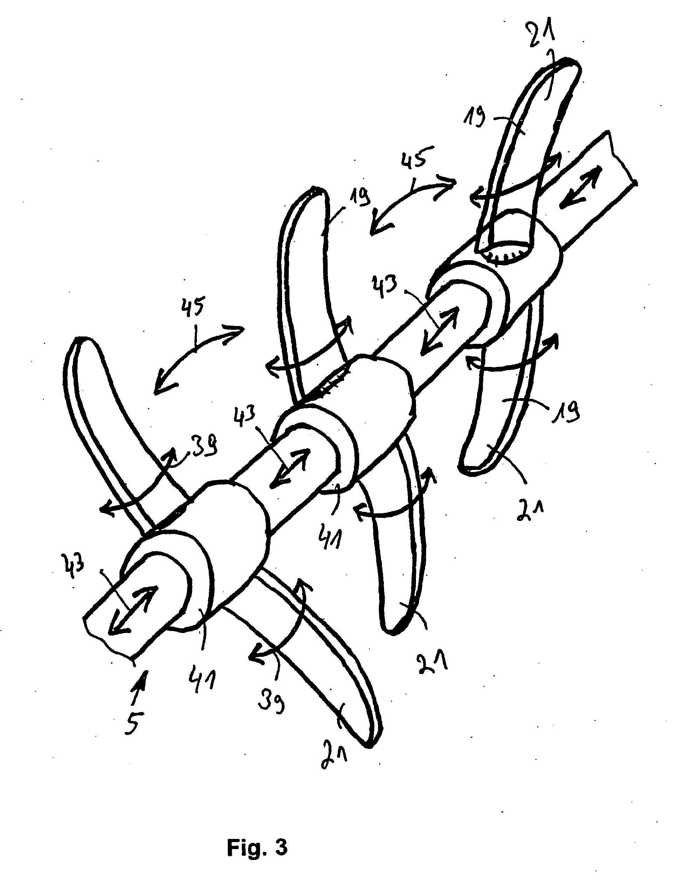

In Figur 3 sind schematisch die optimalen Einstellmöglichkeiten der Schaufeln 21 der Repeller 19 auf der Antriebswelle 5 dargestellt.

Vorteilhafterweise ist jede Schaufel 21 verdrehbar gemäß Doppelpfeil 39 in einem Lagerelement 41 gelagert, sodass die jeweilige Schaufelfläche 22 einer jeden Schaufel gegenüber der Strömung des vorbeiströmenden Wassers entsprechend individuell eingestellt werden kann.

Weiterhin können die Repeller 19 in ihrem Abstand zueinander entlang der Antriebswelle gemäß den Doppelpfeilen 43 im Abstand zueinander eingestellt werden. Die in Figur 3 dargestellten Möglichkeiten sind beispielhaft und die Anordnung der einzelnen Repeller 19 entspricht nicht deren tatsächlicher Einstellung, wobei durch die Doppelpfeile 45 deren Verdrehbarkeit zueinander angegeben ist, wie sie beispielsweise in den Figuren 1 und 2 dargestellt ist.

Mit dieser optimalen Verstellmöglichkeit wird erfindungsgemäß erreicht, dass die strömungsmechanischen Verhältnisse entlang der Antriebswelle optimal genutzt werden können, wobei zudem die Möglichkeit besteht, nicht nur, wie in Figur 3 dargestellt, identische Schaufeln 21 zu verwenden, sondern auch unterschiedliche Schaufeln mit unterschiedlichen Schaufelflächen anzuordnen, die zu einer Optimierung der erfindungsgemäßen Vorrichtung führen können.

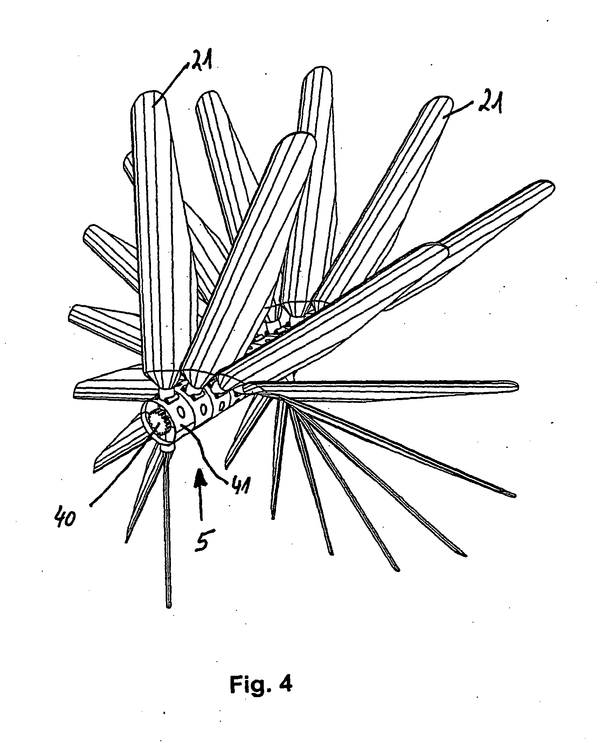

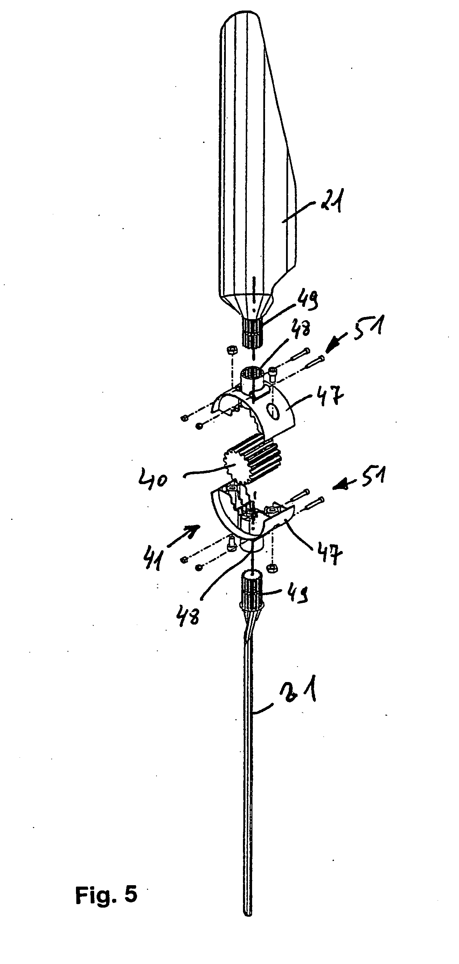

In Figur 4 ist in perspektivischer, schematischer Darstellung eine konstruktive Ausführungsform der Antriebswelle 5 dargestellt. Die Antriebswelle 5 weist eine Vielzahnwelle 40 auf, die längs verlaufende Zähne oder Rippen aufweist, wie das deutlicher aus Figur 5 ersichtlich wird, in der der Aufbau explosionsartig dargestellt ist. Das Lagerelement 41 ist geteilt ausgeführt und weist zwei Lagerschalen 47 auf. Die Lagerschalen 47 weisen eine gezahnte Innenkontur auf, die im Eingriff mit den Zähnen der Vielzahnwelle 40 zum formschlüssigen Umgreifen der Vielzahnwelle 40 dient.

In eine jede Lagerschale 47 ist eine Aufnahmebuchse 48 eingesetzt, wobei die Achsen der Buchsen 48 miteinander fluchten, sodass die Schaufeln 21 um exakt 180 Grad versetzt angeordnet sind. Innen weisen die Aufnahmebuchsen 48 ein Vielzahnprofil auf, das in formschlüssigen Eingriff mit einem Vielzahnprofil eines Lagerzapfens 49 einer jeden Schaufel 21 kommt. Durch den Vielzahnformschluss können sowohl die Schaufeln 21 entsprechend verdreht in die gewünschte Position gebracht werden und kann durch Versetzen der Lagerschalen 47 um die Vielzahnwelle 40 die Versetzung eines Paares von Schaufeln 21 zu dem benachbarten Paar bzw. den benachbarten Paaren auf einfachste Weise eingestellt bzw. bewerkstelligt werden. Herkömmliche Befestigungsmittel 51, gebildet aus Schrauben und Muttern dienen zur Befestigung der Lagerschalen 47 aneinander bzw. der Aufnahmebuchsen 48 an den Lagerschalen.

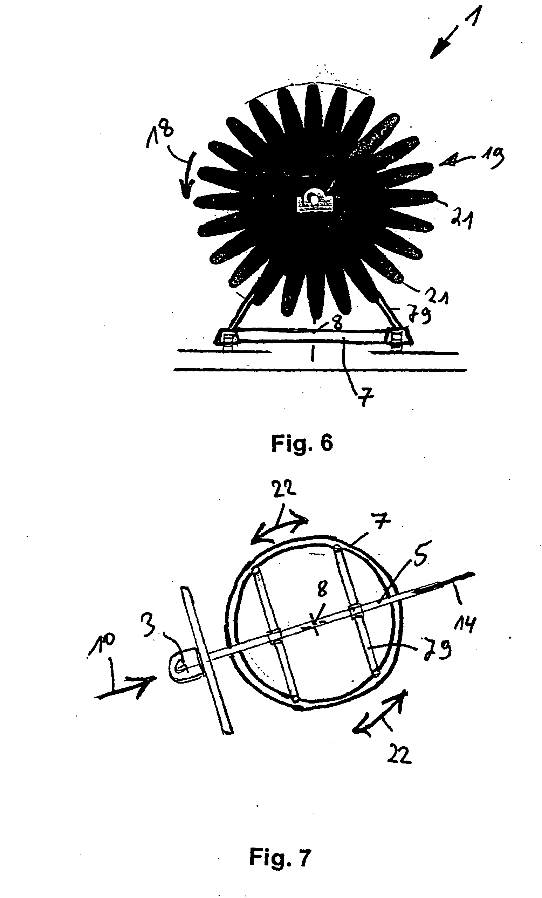

Figur 6 zeigt eine weitere Ausführungsform der erfindungsgemäßen Vorrichtung 1, wobei die Anordnung der Repeller 19 bzw. der Schaufeln 21 der Anordnung gemäß Figur 1 entspricht und die Figur 6 eine Frontansicht darauf darstellt.

Die erfindungsgemäße Vorrichtung 1 umfasst einen Rahmen 7, der, wie aus Figur 7 ersichtlich, im Wesentlichen kreisförmig ausgebildet ist. Er ist um eine Drehachse 8 drehbar gelagert, sodass die Möglichkeit besteht, die erfindungsgemäße Vorrichtung gemäß den Pfeilen 22 um die Achse 8 zu drehen, und damit die Vorrichtung 1 entsprechend der anströmenden Luft gemäß Pfeil 10 optimal auszurichten, was durch das Ruderwerk 14 unterstützt wird.

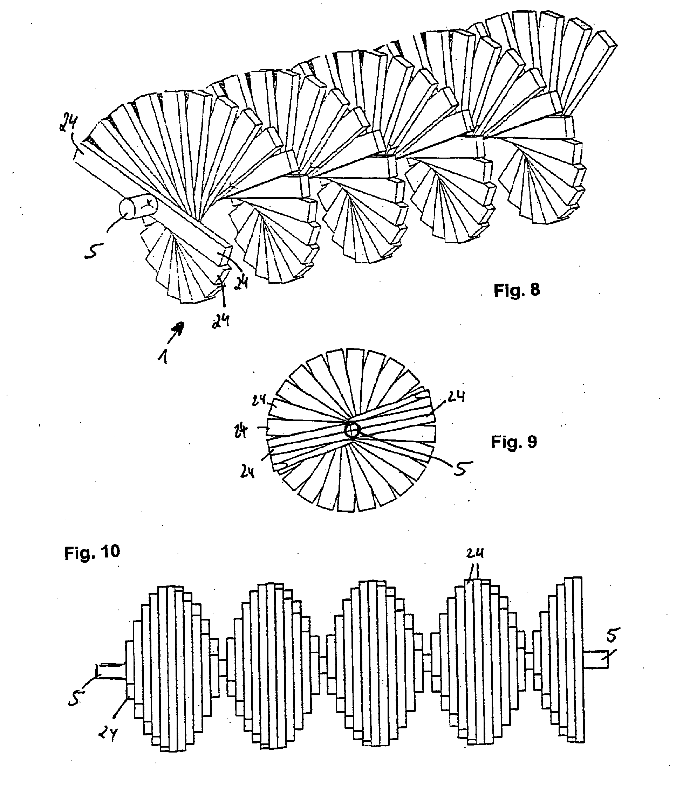

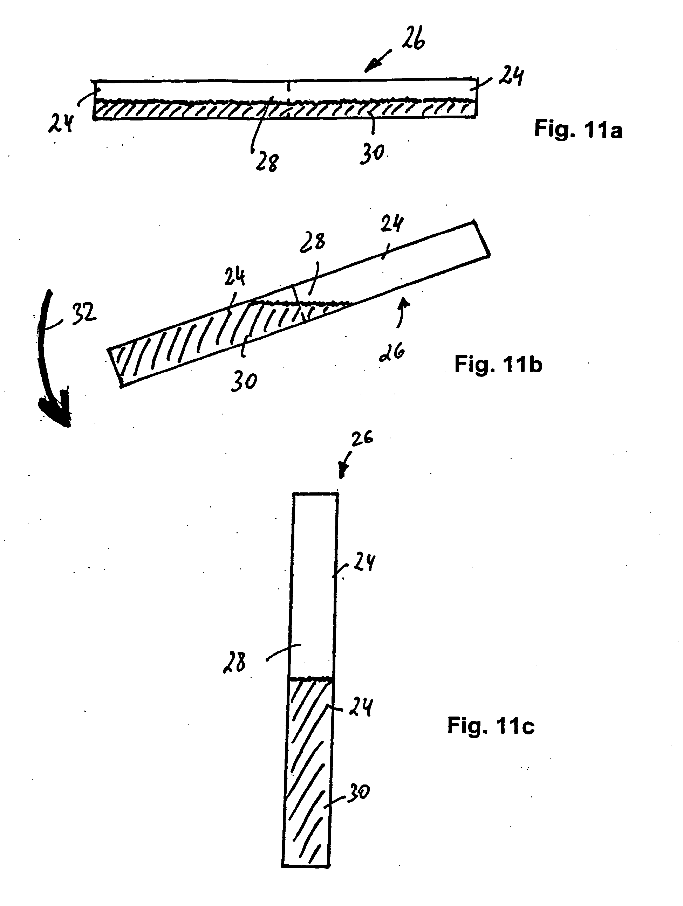

In den Figuren 8 bis 10 ist eine alternative Ausführungsform der erfindungsgemäßen Vorrichtung dargestellt. Dabei zeigt Figur 8 eine perspektivische Ansicht, Figur 9 eine Frontansicht und Figur 10 eine Seitenansicht. Die Figuren 11a bis 11c zeigen in vergrößertem Maßstab jeweils zwei Schaufeln 24 eines Repellers, die also um 180° zueinander versetzt angeordnet sind, welche zusammen ein Hohlprofil 26 bilden in dem ein länglicher Hohlraum 28 ausgebildet ist. Der längliche Hohlraum 28 ist nach außen abgedichtet und weist eine Flüssigkeit 30, bevorzugt Wasser auf. Die Flüssigkeit 30 füllt den Hohlraum 28 nicht vollständig aus, sondern im Wesentlichen zur Hälfte. Wenn die, das Hohlprofil 26 bildenden Schaufeln 24 eines Paares sich aus der waagerechten Position gemäß Fig. 11a, in der die Flüssigkeit 30 im Wesentlichen gleichmäßig verteilt im Hohlraum 28 angeordnet ist, nach einer Seite gemäß Pfeil 32 dreht, bewegt sich die Flüssigkeit 30 aufgrund der Schwerkraft schlagartig in den sich absenkenden Teilhohlraum (siehe Fig. 11b), wodurch schlagartig ein Drehmoment auf die entsprechende Schaufel 24 ausgeübt wird. In Fig. 11c ist der gefüllte Hohlraum 28 in seiner tiefsten Stelle dargestellt und dreht sich weiter wieder bis er die Stellung gemäß Fig. 11a erreicht und so fort.

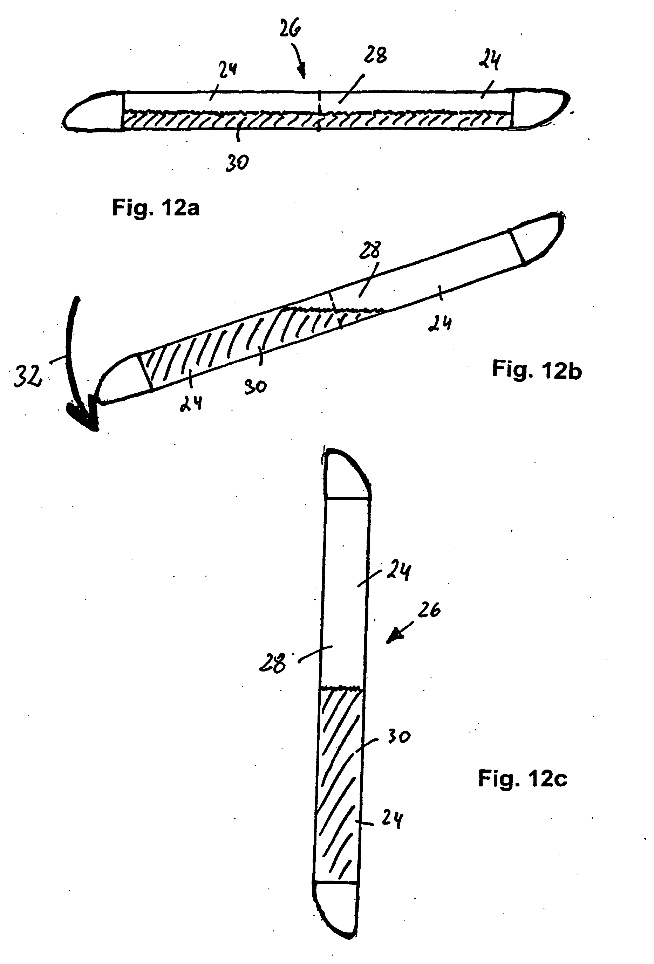

In den Figuren 12a bis 12c ist eine Variante zur Ausführungsform gemäß Figuren 11a bis 11c dargestellt. An den seitlichen bzw. äußeren Stirnenden der Schaufeln 24 sind schaufelartige Spitzen 34 vorgesehen, die eine noch weiter verbesserte Anströmfläche insbesondere bei wenig anströmender Luft aufweisen. Die Ausführungsvarianten gemäß den Figuren 8 bis 12c eignen sich somit besonders bei nur wenig anströmender Luft.

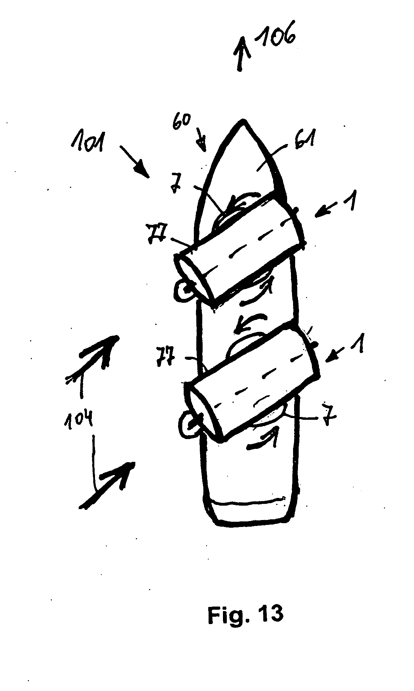

In Figur 13 ist eine erfindungsgemäße Anlage 101 schematisch in einer Draufsicht dargestellt. Die Anlage 101 weist zwei erfindungsgemäße Vorrichtungen 1 auf, die jeweils ein Rohr 77 umfassen, in dem sich wenigstens die Antriebswelle 5 und die Schaufeln 21 bzw. Repeller 19 befinden. Die Vorrichtungen 1 umfassen einen Rahmen 7, der eine Drehung der Rohre 77 ermöglicht, wodurch eine Anpassung an die Richtung der Luftströmung gemäß Pfeil 104 erfolgen kann. Die Vorrichtungen 1 sind auf einem Schiffskörper 60 angeordnet, der einen Rumpf bzw. Auftriebs- oder Schwimmkörper 61 aufweist. Der Generator kann entweder in dem Rohr oder außerhalb angeordnet sein. Die Vorrichtungen 1 dienen bei Off-Shore-Betrieb der Energieerzeugung, wobei die von dem Generator bzw. den Generatoren erzeugte Energie über entsprechende Energiekabel in die angeschlossenen Netze eingespeist wird.

Alternativ kann die von der Anlage 101 bzw. den Vorrichtungen 1 erzeugte Energie auch zum Antrieb des Schiffskörpers 60 dienen, wobei dieser sich unabhängig von der Windrichtung 104 in die gewünschte Richtung, beispielsweise gemäß Pfeil 106 bewegen kann.

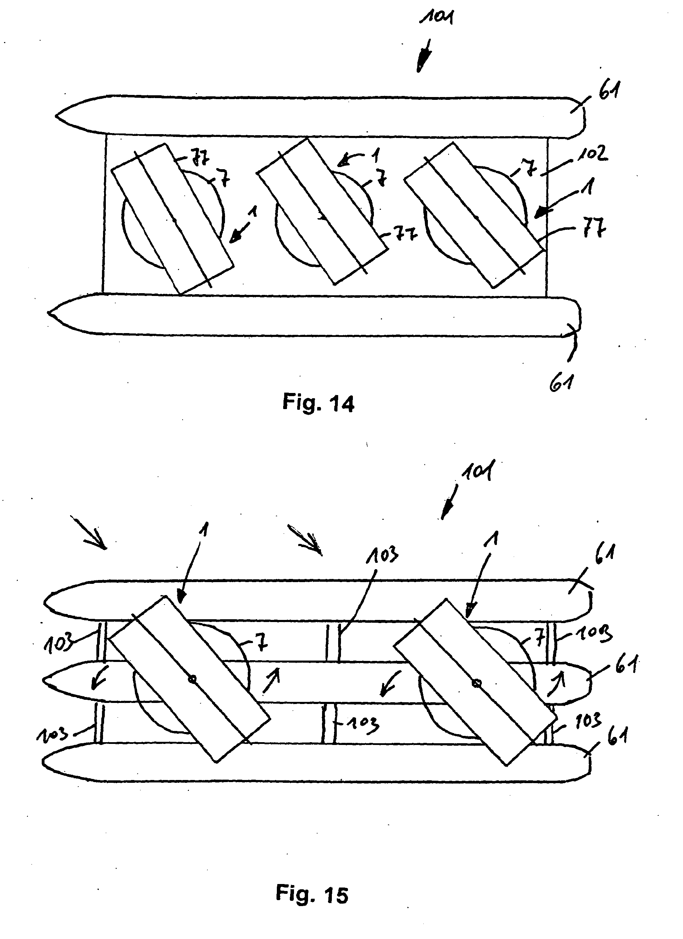

Figur 14 zeigt eine zweite Ausführungsform der erfindungsgemäßen Anlage 101. Sie umfasst drei Vorrichtungen 1, die auf einer Platte 102 angeordnet sind, die ihrerseits auf zwei Schwimmkörpern 61 gelagert ist. Durch die beiden Schwimmkörper 61, ähnlich einem Katamaran wird ersichtlich, dass die Ausführungsform der erfindungsgemäßen Anlage gemäß Figur 14 insbesondere für Off-Shore Energieerzeugungseinsätze geeignet ist.

Figur 15 zeigt eine dritte Ausführungsform der erfindungsgemäßen Anlage 101, welche ihrerseits als Trimaran mit drei parallelen SchwimmSchiffskörpern 61 ausgebildet ist, die durch geeignete Streben 103 miteinander verbunden sind. Zwei Energieerzeugungsvorrichtungen 1 sind auf Drehrahmen 7 auf dem mittleren Schwimmkörper 61 angeordnet.

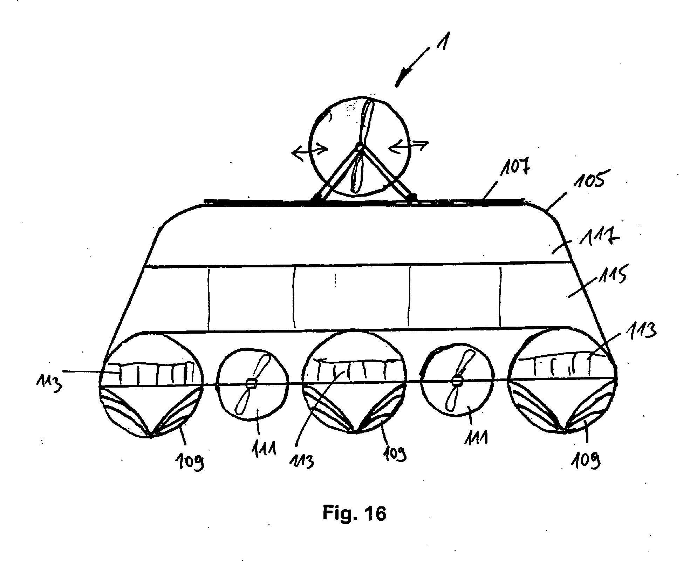

In Figur 16 ist die Verwendung der erfindungsgemäßen Vorrichtung 1 mit dem Antrieb eines größeren Schiffes 105 schematisch dargestellt.

Die Vorrichtung 1 ist auf dem Dach 107 des Schiffs 105 angeordnet, das in Form eines Trimarans ausgebildet ist und drei Schwimmkörper 109 aufweist. Diese können entsprechende Formen in an sich bekannter Weise aufweisen.

Figur 16 zeigt eine Front/Teilschnittansicht eines Schiffes 105, wobei die Antriebe des Schiffes bevorzugt hinter den Schwimmkörpern 109 angeordnet sind, wobei zusätzliche Antriebsvorrichtungen 111 vorgesehen sein können.

In den Schwimmkörpern 109 sind Akkumulatoren 113 vorgesehen, die die von der Vorrichtung 1 erzeugte Energie speichern können und den Antrieben, beispielsweise 111, zur Verfügung stellen können.

Das Schiff 105 kann beispielsweise ein Deck 115 für Fracht, wie beispielsweise Container, Kraftfahrzeuge, etc. und ein Passagierdeck 117 aufweisen.

Selbstverständlich kann auch die erfindungsgemäße Vorrichtung 1 erweitert werden, durch eine erfindungsgemäße Anlage, die aus mehreren Vorrichtungen 1 besteht, um die für den Antrieb des Schiffes notwendige Energie zu liefern. Dies kann zur Speisung von Akkumulatoren und/oder direkt zum Antrieb des Schiffes über entsprechende Elektromotoren dienen.

Zudem kann die erfindungsgemäße Vorrichtung anstelle oder auch zur Lieferung bzw. Erzeugung von Energie für sonstige Energieverbraucher des Schiffes, wie beispielsweise Beleuchtung, Heizung und dergleichen dienen.

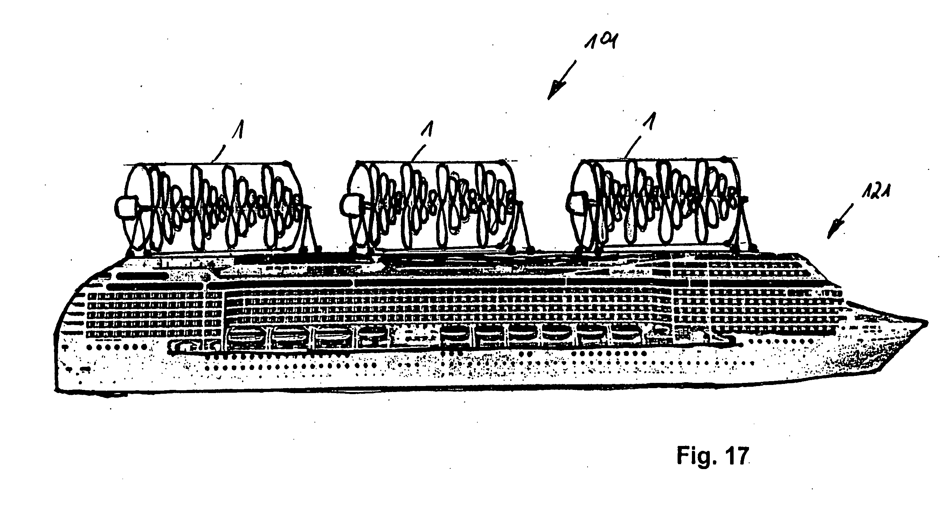

In Figur 17 ist in Seitenansicht ein größeres Schiff 121 hier in Form eines Kreuzfahrschiffes dargestellt. Auf dem Dach des Schiffes ist eine erfindungsgemäße Anlage 101 gebildet aus drei Vorrichtungen 1 angeordnet. Die Vorrichtungen 1 sind ebenfalls jeweils auf drehbaren Rahmen gelagert und können entsprechend der vorherrschenden Windrichtung ausgerichtet werden. Der Vorteil der erfindungsgemäßen Vorrichtung bzw. Anlage wird auch deutlich beim Vergleich mit dem sogenannten Flettner-Rotor, der im Wesentlichen vertikal angeordnet ist. Eine durch den anströmenden Wind erzeugte Schieflage bzw. Krängung, die zum Untergang von Schiffen mit Flettner-Rotor geführt hat, ist bei der erfindungsgemäßen Vorrichtung bzw. Anlage nicht zu befürchten.

Mit der erfindungsgemäßen Vorrichtung zur Erzeugung von regenerativer und erneuerbarer Energie aus Wind wird eine Vielzahl von Vorteilen erreicht, die unter anderem sind:
- einfache und leichte Einsetzbarkeit ohne anfallenden Baumaßnahmen und damit besonders schnelle Verfügbarkeit;
- Ermöglichen einer regionalen Grundversorgung durch entsprechenden ortsnahen Einsatz beim Stromverbraucher;
- modular-aufbaubare Gesamtanlage aus mehreren Einzelvorrichtungen zur optimalen Ausbeute des vorbeiströmenden Wassers je nach Vorort herrschenden Bedingungen;
- universelle und gegebenenfalls automatische Anpassung der Vorrichtung an die vorhandenen Strömungsbedingungen und damit Sicherstellung eines optimalen Wirkungsgrades der erfindungsgemäßen Vorrichtung;
- umweltfreundliche Energieerzeugung;
- optimale Größenanpassung der Vorrichtung an die entsprechende zu erzeugende Energiemenge, beispielsweise Montagesatz in Koffergröße für den Einsatz auf entfernten Besiedelungen und dergleichen;
- Anpassungsmöglichkeit an jegliche Art von fließenden Gewässern und unterschiedlichen Strömungsbedingungen;
- absolut emissionsfreie Energieerzeugung einschließlich Erzeugung von Antriebsenergie für Schiffe aller Art.
- je nach Ausführungsform besonders geräuscharm weil gekapselt.

## Patentansprüche

1. Vorrichtung (1) zur Erzeugung von regenerativer und erneuerbarer Energie aus Wind, mit wenigstens einem Generator (3) zur Erzeugung elektrischer Energie, und einer mit dem Generator (3) verbundenen Antriebswelle (5), die eine Mehrzahl von Schaufeln (21, 24) aufweist, die durch vorbeiströmende Luft in Drehung versetzbar sind, wobei die Schaufeln (21, 24) entlang der Antriebswelle (5) und zueinander versetzt angeordnet sind, **dadurch gekennzeichnet, dass**
- die Schaufeln (21, 24) repellerartig ausgebildet sind und dass
- die Winkelstellung der Schaufeln (21, 24) untereinander einstellbar ist.

2. Vorrichtung nach Anspruch 1, **dadurch gekennzeichnet, dass** der Abstand der Schaufeln (21, 24) in Längsrichtung der Antriebswelle (5) einstellbar ist.

3. Vorrichtung nach einem der Ansprüche 1 oder 2, **dadurch gekennzeichnet, dass** die Winkelstellung der Schaufelfläche (22) bezüglich der Antriebswelle (5) einstellbar ist.

4. Vorrichtung nach einem der Ansprüche 1 bis 3, **dadurch gekennzeichnet, dass** die Einstellung der Schaufeln (21, 24) mittels Computersteuerung erfolgt, wobei die Einstellung mechanisch, elektromotorisch, pneumatisch oder 16 hydraulisch erfolgen kann.

5. Vorrichtung nach einem der Ansprüche 1 bis 4, **dadurch gekennzeichnet, dass** die Schaufeln (21, 24) auf der Antriebswelle (5) lösbar montiert sind.

6. Vorrichtung nach einem der Ansprüche 1 bis 5, **dadurch gekennzeichnet, dass** die Antriebswelle (5) unmittelbar mit dem Generator (3) verbunden ist.

7. Vorrichtung nach einem der Ansprüche 1 bis 6, **dadurch gekennzeichnet, dass** die Antriebswelle (5) in einem Rahmen (7) gelagert ist.

8. Vorrichtung nach Anspruch 7, **dadurch gekennzeichnet, dass** der Rahmen im wesentlichen waagrecht und um eine vertikale Achse drehbar angeordnet ist.

9. Vorrichtung nach einem der vorhergehenden Ansprüche, **dadurch gekennzeichnet, dass** sie in einem Rohr (77) angeordnet ist.

10. Vorrichtung nach einem der Ansprüche 1 bis 9, **dadurch gekennzeichnet, dass** sie oberhalb eines Schiffskörpers angeordnet ist, der einen oder mehrere Auftriebs- oder Schwimmkörper (61) aufweist und vorzugsweise eine Verankerung (63) aufweist.

11. Vorrichtung nach Anspruch 10, **dadurch gekennzeichnet, dass** sie ein selbstausrichtendes Ruderwerk aufweist.

12. Vorrichtung nach einem der Ansprüche 1 bis 11, **dadurch gekennzeichnet, dass** die Antriebswelle (5) sowohl an ihren beiden Enden als auch an wenigstens einer weiteren Stelle (87) zwischen den Enden gelagert ist.

13. Vorrichtung nach Anspruch 12, **dadurch gekennzeichnet, dass** zur Lagerung der Antriebswelle (5) wartungsfreie, ölfreie Gleit- oder Kugellager auch aus Kunststoff oder Keramik vorgesehen sind.

14. Vorrichtung nach einem der Ansprüche 1 bis 13, **dadurch gekennzeichnet, dass** die Antriebswelle (5) als eine Vielzahnwelle (40) und die Halterung der jeweiligen Schaufel (21) als Vielzahnhalterung (48) ausgebildet ist.

15. Vorrichtung nach einem der Ansprüche 1 bis 14, **dadurch gekennzeichnet, dass** ein Gitterkäfig vorgesehen ist, der die Vorrichtung umgibt.

16. Vorrichtung nach einem der vorhergehenden Ansprüche, **dadurch gekennzeichnet, dass** je zwei um 180° versetzte Schaufeln (24) ein gemeinsames Hohlprofil (26) bilden, das einen Hohlraum (28) aufweist, in dem eine Flüssigkeit (30) vorhanden ist.

17. Vorrichtung nach Anspruch 16, **dadurch gekennzeichnet, dass** die in dem Hohlraum (28) vorhandene Flüssigkeit Wasser ist.

18. Vorrichtung nach Anspruch 16 oder 17, **dadurch gekennzeichnet, dass** die Flüssigkeit (30) den Hohlraum (28) im Wesentlichen zur Hälfte ausfüllt.

19. Anlage (101) zur Erzeugung von regenerativer und erneuerbarer Energie aus Wind, **dadurch gekennzeichnet, dass** sie eine Mehrzahl von hintereinander und/oder nebeneinander und/oder übereinander angeordneter Vorrichtungen (1) nach einem der Patentansprüche 1 bis 18 aufweist.

20. Anlage nach Anspruch 19, **dadurch gekennzeichnet, dass** die Antriebswelle (5) der Vorrichtungen (1) miteinander kardanisch verbunden sind.

21. Verwendung wenigstens einer Vorrichtung (1) nach einem der Ansprüche 1 bis 18 zum Antrieb eines Schiffes (105, 121).

22. Verwendung einer Anlage (101) nach Anspruch 19 oder 20 zum Antrieb eines Schiffes.

## Claims

1. Device (1) for producing regenerative and renewable energy from wind, having at least one generator (3) for producing electrical energy, and a drive shaft (5) which is connected to the generator (3) and which has a plurality of blades (21, 24) which can be moved in rotation by means of passing air, the blades (21, 24) being arranged so as to be offset relative to each other along the drive shaft (5), **characterised in that**
- the blades (21, 24) are constructed in a repeller like manner, and **in that**
- the angular position of the blades (21, 24) can be mutually adjusted.

2. Device according to claim 1, **characterised in that** the spacing of the blades (21, 24) can be adjusted in the longitudinal direction of the drive shaft (5).

3. Device according to either claim 1 or claim 2, **characterised in that** the angular position of the blade face (22) can be adjusted with respect to the drive shaft (5).

4. Device according to any one of claims 1 to 3, **characterised in that** the adjustment of the blades (21, 24) is carried out by means of computer control, the adjustment being able to be carried out in a mechanical, electromotive, pneumatic or 16 hydraulic manner.

5. Device according to any one of claims 1 to 4, **characterised in that** the blades (21, 24) are releasably mounted on the drive shaft (5).

6. Device according to any one of claims 1 to 5, **characterised in that** the drive shaft (5) is directly connected to the generator (3).

7. Device according to any one of claims 1 to 6, **characterised in that** the drive shaft (5) is supported in a frame (7).

8. Device according to claim 7, **characterised in that** the frame is arranged in a substantially horizontal manner and so as to be able to be rotated about a vertical axis.

9. Device according to any one of the preceding claims, **characterised in that** it is arranged in a pipe (77).

10. Device according to any one of claims 1 to 9, **characterised in that** it is arranged above a ship body which has one or more buoyancy or floating members (61) and preferably has an anchoring means (63).

11. Device according to claim 10, **characterised in that** it has a self-aligning rudder mechanism.

12. Device according to any one of claims 1 to 11, **characterised in that** the drive shaft (5) is supported both at the two ends thereof and in at least one additional location (87) between the ends.

13. Device according to claim 12, **characterised in that**, in order to support the drive shaft (5), there are provided maintenance-free, oil-free sliding bearings or ball-bearings which are also composed of plastics material or ceramic material.

14. Device according to any one of claims 1 to 13, **characterised in that** the drive shaft (5) is constructed as a multi-tooth shaft (40) and the retention means of the respective blade (21) is constructed as a multi-tooth retaining member (48).

15. Device according to any one of claims 1 to 14, **characterised in that** a grid cage is provided which surrounds the device.

16. Device according to any one of the preceding claims, **characterised in that** each two blades (24) which are offset through 180° form a common hollow profile-member (26) which has a hollow space (28), in which a fluid (30) is provided.

17. Device according to claim 16, **characterised in that** the fluid provided in the hollow space (28) is water.

18. Device according to claim 16 or claim 17, **characterised in that** the fluid (30) substantially half-fills the hollow space (28).

19. System (101) for producing regenerative and renewable energy from wind, **characterised in that** it has a plurality of devices (1) which are arranged one behind the other and/or one beside the other and/or one above the other according to any one of patent claims 1 to 18.

20. System according to claim 19, **characterised in that** the drive shafts (5) of the devices (1) are connected to each other in a cardanic manner.

21. Use of at least one device (1) according to any one of claims 1 to 18 for driving a ship (105, 121).

22. Use of a system (101) according to claim 19 or claim 20 for driving a ship.

## Revendications

1. Dispositif (1) de production d'énergie régénérative et renouvelable à partir du vent, avec au moins un générateur (3) pour la production d'énergie électrique, et un arbre de transmission (5) relié au générateur (3) et possédant une pluralité de pales (21, 24) qui sont aptes à être mises en rotation par l'air qui s'écoule, les pales (21, 24) étant disposées le long de l'arbre de transmission (5) en étant décalées entre elles,
**caractérisé par le fait que**
- les pales (21, 24) sont réalisées de type à répulsion, et que
- la position angulaire des pales (21, 24) entre elles est apte à être réglée.

2. Dispositif selon la revendication 1, **caractérisé par le fait que** la distance entre les pales (21, 24) est apte à être réglée dans la direction longitudinale de l'arbre de transmission (5).

3. Dispositif selon l'une des revendications 1 ou 2, **caractérisé par le fait que** la position angulaire de la surface des pales (22) est apte à être réglée par rapport à l'arbre de transmission (5).

4. Dispositif selon l'une des revendications 1 à 3, **caractérisé par le fait que** le réglage des pales (21, 24) est assuré par une commande informatique, le réglage pouvant se faire mécaniquement, par moteur électrique, pneumatiquement ou hydrauliquement.

5. Dispositif selon l'une des revendications 1 à 4, **caractérisé par le fait que** les pales (21, 24) sont montées de manière amovible sur l'arbre de transmission (5).

6. Dispositif selon l'une des revendications 1 à 5, **caractérisé par le fait que** l'arbre de transmission (5) est relié directement au générateur (3).

7. Dispositif selon l'une des revendications 1 à 6, **caractérisé par le fait que** l'arbre de transmission (5) est supporté dans un cadre (7).

8. Dispositif selon la revendication 7, **caractérisé par le fait que** le cadre est disposé sensiblement horizontalement et apte à tourner autour d'un axe vertical.

9. Dispositif selon l'une des revendications précédentes, **caractérisé par le fait qu'**il est disposé dans un tube (77).

10. Dispositif selon l'une des revendications 1 à 9, **caractérisé par le fait qu'**il est disposé au-dessus d'une coque de bateau, qui présente un ou plusieurs flotteurs ou corps flottants (61) et présente de préférence un ancrage (63).

11. Dispositif selon la revendication 10, **caractérisé par le fait qu'**il possède un mécanisme de gouvernail à alignement automatique.

12. Dispositif selon l'une des revendications 1 à 11, **caractérisé par le fait que** l'arbre de transmission (5) est supporté non seulement par ses deux extrémités mais encore par au moins un autre point (87) entre les extrémités.

13. Dispositif selon la revendication 12, **caractérisé par le fait qu'**il est prévu pour supporter l'arbre de transmission (5) des paliers lisses ou à billes sans huile et sans entretien, également faits en matière plastique ou en céramique.

14. Dispositif selon l'une des revendications 1 à 13, **caractérisé par le fait que** l'arbre de transmission (5) prend la forme d'un arbre à plusieurs dents (40) et la monture des différentes pales (21) est une monture à plusieurs dents (48).

15. Dispositif selon l'une des revendications 1 à 14, **caractérisé par le fait qu'**il est prévu en outre une cage faite de grilles qui entoure le dispositif.

16. Dispositif selon l'une des revendications précédentes, **caractérisé par le fait que** deux pales (24) décalées de 180° forment ensemble un profil creux commun (26) qui possède un espace creux (28) dans lequel se trouve un liquide (30).

17. Dispositif selon la revendication 16, **caractérisé par le fait que** le liquide se trouvant dans l'espace creux (28) est de l'eau.

18. Dispositif selon l'une des revendications 16 ou 17, **caractérisé par le fait que** le liquide (39) remplit l'espace creux (28) sensiblement à moitié.

19. Installation (101) de production d'énergie régénérative et renouvelable à partir du vent, **caractérisée par le fait qu'**elle comprend une pluralité de dispositifs (1) tels que définis à l'une des revendications 1 à 18 qui sont disposés successivement et/ou juxtaposés et/ou superposés.

20. Installation selon la revendication 19, **caractérisée par le fait que** les arbres de transmission (5) des dispositifs (1) sont reliés ensemble par des joints de Cardan.

21. Utilisation d'au moins un dispositif (1) tel que défini à l'une des revendications 1 à 18 pour la propulsion d'un bateau (105, 121).

22. Utilisation d'une installation (101) telle que définie à l'une des revendications 19 ou 20 pour la propulsion d'un bateau.
